# EUROPÄISCHE PATENTANMELDUNG

(11) **EP 0 558 456 A1**
(43) Veröffentlichungstag der Anmeldung: **01.09.1993**
(21) Anmeldenummer: 93810126.8
(22) Anmeldetag: 24.02.1993
(51) Int. Cl.: A01G 27/00

(54) **Behälter zur gesteuerten Abgabe von Flüssigkeit an einen Verbraucher**

(30) Priorität: 24.02.1992 CH 558/92
(71) Anmelder: HEEBAG A. HEEB AG, CH-9464 Rüthi-Lienz (CH)
(72) Erfinder: Heeb, Albin, CH-9464 Lienz (CH); Eichmüller, Karl, CH-9463 Oberriet (CH)
(74) Vertreter: Riederer, Conrad A., Dr.

(57) **Zusammenfassung**

Bei diesem Behälter wird der Flüssigkeitsspiegel (29) immer praktisch konstant gehalten, so dass keine Gefahr einer Versumpfung der Pflanze im Topf (13) besteht. Wird von der Pflanze Flüssigkeit aufgenommen, so sinkt zwar der Flüssigkeitsspiegel etwas ab, so dass etwas Luft in den Tank (17) durch die Oeffnung (28) eindringen kann. Es tritt dann durch die Oeffnung (27) etwas Flüssigkeit aus, der Flüssigkeitsspiegel steigt an und die Zufuhr von Luft bricht ab. Das hydrostatische Gleichgewicht ist dann wieder hergestellt, so dass keine Flüssigkeit mehr austritt, bis sich nach weiterem Flüssigkeitsverbrauch das Spiel wiederholt. Zum Nachfüllen wird der Verschlussdeckel (3) abgenommen, so dass das Ventil (35) schliesst und ein Auslaufen des Tanks (17) verhindert. Wird der Verschlussdeckel (31) wieder eingesetzt, wird durch dessen Betätigungsglied (41) das Ventil (35) wieder geöffnet.

## Beschreibung

Die Erfindung bezieht sich auf einen Behälter zur Abgabe von Flüssigkeit an einen Verbraucher, z.B. für die Bewässerung und/oder Ernährung von Zimmerpflanzen in Heim und Büro oder als Grablicht und/oder Weihwasserspender.

Seit längerer Zeit, insbesondere seit der Erfindung der Hydrokultur haben sich zahlreiche Erfindungen mit Pflanzenbehältern beschäftigt, welche das Ziel haben, die Bewässerung und/oder Ernährung von Zimmerpflanzen zu vereinfachen und zu optimieren. Die bekannten Behälter haben jedoch den Nachteil, dass ihnen ein grosser Flüssigkeitsreserveraum fehlt. Dies wiederum hat den Nachteil, dass Flüssigkeit in kurzen Intervallen nachgefüllt werden muss. Wird dies beispielsweise wegen Ferienabwesenheit unterlassen, so sterben bei Flüssigkeitsmangel die Pflanzen in kürzester Zeit ab. Ein weiterer Nachteil bekannter Geräte ist das Fehlen eines Pegelstandanzeigers oder die Gefahr, dass der Pegelstandanzeiger nicht richtig funktioniert. Bei gewissen bekannten Geräten besteht auch die Gefahr einer Versumpfung der Pflanzen. Aus diesen Gründen wird auch heute noch ein Grossteil der Pflanzen in Heim und Büro auf übliche Weise mit der Spritzkanne bewässert. Ein weiterer Nachteil der bekannten Pflanzenbehälter für die Hydrokultur in Heim und Büro besteht darin, dass sie sich nicht zur gleichzeitigen Verwendung für die Humuskultur eignen. Dafür besteht aber ein grosses Bedürfnis, weil praktisch alle als Zimmerpflanzen-verwendeten Blütenpflanzen nur in Humus gedeihen.

Es ist Aufgabe der vorliegenden Erfindung, einen universellen Behälter, insbesondere Pflanzenbehälter, zu schaffen, welcher die erwähnten Nachteile ganz oder teilweise vermeidet. Der Behälter soll sich für alle heute bekannten Kulturarten eignen, sowohl für die Humuskultur als auch für Kulturen, wie sie z.B. unter den Namen Hydro-, Halbhydro-, Steinwoll-, Kunstschwamm- und Aquakultur bekannt sind.

Der erfindungsgemässe Behälter ist gekennzeichnet durch eine Wanne zum Abgeben von Flüssigkeit an einen Verbraucher, ein Tank zur Speicherung einer Flüssigkeitsreserve und Mittel, welche den Pegelstand der Flüssigkeit in der Wanne konstant halten, indem sie entsprechend dem Flüssigkeitskonsum durch den Verbraucher Flüssigkeit aus dem Tank in die Wanne fliessen lassen. Dieser Behälter hat den Vorteil, dass er den Pflanzen optimale Lebensbedingungen bietet. Dadurch, dass der Pegelstand konstant gehalten wird, wird eine Versumpfung verhindert. Auch ist der Nachschub von Flüssigkeit in konstanter Nährstoffkonzentration bis zum Zeitpunkt des Nachfüllens gewährleistet. Der Nachschub der Flüssigkeit erfolgt mit Umgebungstemperatur, so dass ein Kälteschock vermieden wird. Weil die Flüssigkeit der Pflanze ausschliesslich von unten zugeführt wird, sind die Verdunstungsverluste gering. Auch erfolgt keine Verkrustung und Verschmutzung des Humus oder des Blähtons. Somit ist auch kein Auswaschen und Auswechseln des Blähtons oder Humus notwendig. Es muss auch keine ausgelaugte Flüssigkeit abgesogen werden. Von besonderer Bedeutung ist, dass das Nachfüllintervall gross ist.

Eine vorteilhafte Ausführungsform der Erfindung sieht vor, dass der Tank im Betrieb luftdicht abgeschlossen und unten auf der Höhe des gewünschten Flüssigkeitsspiegels in der Wanne eine Oeffnung aufweist. Dies ergibt eine besonders einfache Konstruktion, die sehr betriebssicher ist, weil sie für den Betrieb keiner beweglichen Teile bedarf.

Das Nachfüllen der Flüssigkeit kann auf verschiedene Weise erfolgen. Wenn zum Beispiel der Behälter schlecht zugänglich in einem hohen Raum angeordnet ist, kann die Flüssigkeitszufuhr über eine Leitung erfolgen, wobei aber beim Nachfüllen durch geeignete Massnahmen für die Entlüftung des Tanks gesorgt werden muss. Gemäss einer vorteilhaften Ausführungsform der Erfindung weist der Tank eine Einfüllöffnung mit einem luftdicht verschliessbaren Verschlussdeckel und ein Ventil zum Verschliessen der Oeffnung auf. Bei entferntem Verschlussdekkel verhindert das Ventil ein Ausfliessen von Flüssigkeit in die Wanne. Es ist möglich, dass der Verschlussdeckel ein Betätigungsglied aufweist, welches bei verschlossener Einfüllöffnung auf das Ventil einwirkt und dieses offen hält. Wird der Verschlussdeckel entfernt, so schliesst das Ventil, so dass automatisch ein Ausfliessen von Flüssigkeit aus dem Tank in die Wanne verhindert wird. Dies erlaubt eine leichte Bedienung, wobei nichts falsch gemacht werden kann. Zweckmässigerweise weist das Betätigungsglied einen Raum zur Aufnahme eines Schwimmers mit einem Füllstandanzeiger auf. Dies erlaubt eine einfache Kontrolle des Füllstandes. Da sich der Schwimmer mit dem Füllstandanzeiger im Innern des Verschlussdeckels befindet, ragen keine Teile nach aussen. Es besteht somit keine Gefahr einer Beschädigung. Die Füllstandanzeige ist daher immer zuverlässig. Es wäre möglich, durch den Füllstandanzeiger beispielsweise einen Magnetschalter zu betätigen, der bei leerem Tank einen optischen oder akkustischen Alarm auslöst. Eine einfache optische Anzeige kann aber dadurch erreicht werden, dass der Verschlussdeckel durchsichtig oder transparent ausgeführt wird. Der Füllstandanzeiger ist so durch den Verschlussdeckel hindurch sichtbar. Vorteilhaft ist der Schwimmer als Tauchschwimmer ausgebildet. Dies ergibt eine platzsparende Konstruktion.

Auf eine Füllstandanzeige könnte aber auch verzichtet werden, wenn der Tank durchsichtig oder transparent ausgestattet wird, so dass der Flüssigkeitsstand im Tank sichtbar wird.

Vorteilhaft ist in der Wanne mindestens eine Auflage zum Aufsetzen eines Pflanzenbehälters vorgesehen. Diese Auflage besitzt vorteilhaft eine Höhe, dass sie im Betrieb unter den Flüssigkeitsspiegel zu liegen kommt. Dies ermöglicht es beispielsweise, Pflanzen in Tontöpfen in die Wanne zu stellen, wobei die jeweilige Pflanze vom Boden des Topfes her mit Flüssigkeit versorgt wird.

Vorteilhaft ist der Tank über der Wanne angeordnet und besitzt mindestens eine Aussparung für Pflanzen. Die Aussparung kann beispielsweise rund sein, um das Einstellen von Pflanzen in üblichen Tontöpfen zu gestatten. In diesem Fall wird der Topf vom Tank umgeben. Der Tank bildet also eine Umfassung. Auf diese Weise wird der vorhandene Platz auf optimale Weise zur Schaffung eines grossen Flüssigkeitsvolumens ausgenützt. Das Flüssigkeitsvolumen bildet auch einen Wärmespeicher, der beispielsweise über Nacht, wenn die Temperatur der Raumheizung abgesenkt wird, Wärme an die Pflanzen abgeben kann.

Es ist auch möglich, den Tank in einer Wanne unterzubringen. Die Wanne kann in diesem Fall eine Wandung aufweisen, die praktisch gleich hoch ist wie die Gesamthöhe von Unterteil und Tank, so dass diese seitlich abgedeckt werden. Die Wanne besteht in diesem Fall vorteilhaft aus einem geeigneten dekorativen Material.

Es ist möglich, eine Vielzahl der für Pflanzen bestimmten Aussparungen hintereinander oder nebeneinander anzuordnen.

Eine besonders vorteilhafte Ausführungsform der Erfindung sieht vor, dass der Tank eine Oeffnung zum Wasserauslass im unteren Bereich aufweist und eine Oeffnung zum Lufteinlass auf der Höhe des gewünschten. Flüssigkeitsspiegels in der Wanne besitzt, und dass sich ein Lufteinlasskanal von der Lufteinlassöffnung bis in den oberen Bereich des Tanks erstreckt. Dadurch, dass der Lufteinlass und der Wasserauslass durch getrennte Oeffnungen erfolgt, wird eine höhere Betriebssicherheit erzielt.

Die Erfindung betrifft auch die Verwendung mehrerer Behälter, wobei die Wannen und Tanks miteinander verbunden sind. Dies hat den Vorteil, dass alle Tanks über eine einzige Einfüllöffnung aufgefüllt werden können. Auch können mehrere standardisierte Behälter in verschiedenen Konfigurationen zusammengeschaltet werden.

Schliesslich betrifft die Erfindung auch ein Grabgesteck mit mindestens zwei Behältern, wobei jeder Behälter der Aufnahme einer anderen Flüssigkeit dient. Dieses Grabgesteck kann gleichzeitig als Weihwasserspender und als Grablicht dienen. Vorteilhaft weist das Grabgesteck mindestens zwei Tanks und eine den Tanks gemeinsame Wanne mit einem Abteil für jeden Tank auf. Dies ergibt eine einfache Konstruktion für dieses multifunktionelle Gerät. Da die Wanne relativ gross ist, kann sie sicher auf dem Grab plaziert werden, insbesondere, wenn unten an der Wannne Verankerungsstäbe vorgesehen sind, welche eine Verankerung im Erdreich gestatten.

Ausführungsbeispiele der Erfindung werden nun unter Bezugnahme auf die Zeichnung beschrieben. Es zeigt:
- Fig. 1: einen Schnitt durch eine erste Ausführungsform eines beispielsweise quadratischen oder runden Behälters, welcher sich insbesondere als Pflanzenbehälter eignet,
- Fig. 2: eine zweite Ausführungsform eines Behälters, der sich beispielsweise als Grabgesteck mit Grablicht oder als Weihwasserbehälter eignet,
- Fig. 3: eine dritte Ausführungsform eines Behälters mit einer Vielzahl von Aussparungen,
- Figuren 4 bis 7: Beispiele von Behälterformen mit mehreren Aussparungen zur Aufnahme von Pflanzen.
- Figur 8: eine Ausführungsform wie in Fig. 1, wobei jedoch separate Oeffnungen für den Lufteinlass und den Wasserauslass vorgesehen sind.
- Figur 9: ein Grabgesteck mit Grablicht, Weihwasserspender und Blumenvase,

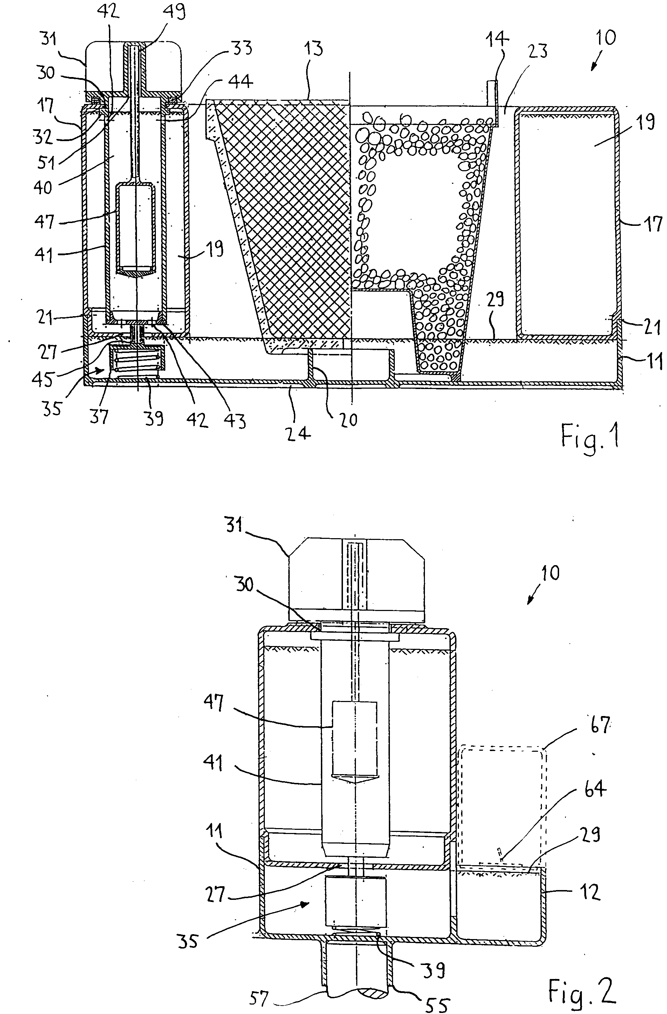

Wie Fig. 1 zeigt, besteht der Behälter 10 im wesentlichen aus einer Wanne 11 zur Abgabe von Flüssigkeit an einen Verbraucher und einem Tank 17 zur Speicherung einer Flüssigkeitreserve 19. Der Verbraucher ist z.B. ein Blumentopf 13 oder ein Hydrokultureinsatz 14. Der Tank 17 besitzt einen Flansch 21 zum Aufsetzen auf die Wanne 11, mit welcher er zweckmässigerweise fest verbunden ist. Eine zentrale Aussparung 23 ermöglicht das Einsetzen des Verbrauchers 13, 14 in die Wanne 11. Die Aussparung 23 kann aber auch z.B. einen Einsatz aus Steinwolle oder einen Kunststoffschwamm aufnehmen. Statt einer einzigen Aussparung 23 können auch mehrere Aussparungen 23 vorgesehen werden, wie dies beispielsweise aus den Figuren 4 bis 7 ersichtlich ist. Am Boden 24 des Tanks kann eine Auflage 20 für den Verbraucher ausgebildet sein. Dadurch wird gewährleistet, dass der Boden des z.B. aus Ton bestehenden Topfes 13 von der Flüssigkeit in der Wanne 11 umspült wird, so dass eine Diffusion der Flüssigkeit durch die Topfwandung hindurch erfolgen kann. Beim gezeigten Ausführungsbeispiel von Fig. 1 entspricht die Höhe des Tanks 17 etwa der Höhe des Blumentopfes 13 oder des Hydrokultureinsatzes 14. Der eingelegte Gegenstand 13, 14 wird also vom Tank 17 rund umgeben. Auf diese Weise wird der zur Verfügung stehende Platz sehr gut ausgenützt, um eine grosse Flüssigkeitsreserve zu schaffen.

Am unteren Teil des Tanks 17 ist eine Oeffnung 27 vorgesehen, durch welche Flüssigkeit aus dem Tank 17 in die Wanne 11 fliessen kann. Da der Tank 17 verschlossen ist, findet im Betrieb ein Durchfluss durch die Oeffnung 27 erst statt, nachdem Luft durch diese Oeffnung in den Tank 17 eingedrungen ist. Dadurch wird der Flüssigkeitsspiegel 29 auf dem eingezeichneten Pegelstand konstant gehalten.

Das Nachfüllen des Tanks kann auf verschiedene Weise erfolgen. Beim gezeigten Ausführungsbeispiel ist zu diesem Zweck ein Verschlussdeckel 31 für eine Einfüllöffnung 30 vorgesehen, der beispielsweise mit einem Bajonettverschluss 32 mit dem Tank 17 verbunden werden kann. Der Abdichtung dient beispielsweise ein Dichtring 33 aus elastomerem Material.

Ein Ventil 35 mit einem Ventilglied 37 und einer Feder 39 ist vorgesehen, um die Oeffnung 27 beim Auffüllen des Tanks 17 zu verschliessen. Der Verschlussdeckel 31 weist ein Betätigungsglied 41 auf, das bei verschlossener Einfüllöffnung 30 das Ventilglied 37 in der eingezeichneten Lage und somit die Oeffnung 27 offen hält. Das Betätigungsglied 41 kann beispielsweise käfig- oder hohlzylinderförmig sein. Wenn die Verlängerung die Form eines Hohlzylinders besitzt, sorgen Oeffnungen 42, 44 dafür, das Flüssigkeit in diesen einfliessen bzw. aus diesem ausfliessen kann. Unten ist die Verlängerung 41 mit einer Endplatte 43 abgeschlossen. Diese liegt am Zapfen 45 des Ventilglieds 37 an, um das Ventil 35 offen zu halten. Das hohlzylindrische oder käfigartige Betätigungsglied 41 dient ferner der Aufnahme eines Schwimmers 47, der mit einem Füllstandanzeiger 49 in Form eines Stabes versehen ist. Der Füllstandanzeiger 49 kann in eine Ausnehmung 51 des Verschlussdeckels 31 eingreifen. Der Verschlussdeckel 31 besteht aus einem durchsichtigen oder transparentem Material, damit die Lage des Füllstandanzeigers 49 sichtbar ist. Der Schwimmer 47 ist vorteilhaft ein Tauchschwimmer.

Die Wirkungsweise kann zusammengefasst wie folgt beschrieben werden:

Muss das Gerät in Betrieb gesetzt werden oder während des Betriebs aufgefüllt werden, so wird der Verschlussdeckel 31 entfernt. Die Feder 39 drückt daher das Ventilglied 35 nach oben und verschliesst die Oeffnung 27, so dass ein Ausfliessen von Flüssigkeit in die Wanne 11 verhindert wird. Nach dem Auffüllen des Tanks 17 wird der Verschlussdeckel 31 wieder aufgesetzt, wobei durch das Betätigungsglied mit der Endplatte 43 das Ventil 35 geöffnet wird. Es fliesst dann Flüssigkeit aus dem Tank 17 durch die Oeffnung 27 in die Wanne 11. Gleichzeitig kann Luft durch die Oeffnung 27 in den Tank 17 eindringen. Wird aber der eingezeichnete Pegel des Flüssigkeitsspiegels 29 erreicht, kann keine Luft mehr in den Tank 17 einfliessen, so dass ein hydrostatischer Gleichgewichtszustand zwischen dem Tank und der Wanne 11 hergestellt wird. Wird Flüssigkeit vom Verbraucher 13, 14 aufgenommen, so sinkt der Flüssigkeitsspiegel, so dass wieder etwas Luft durch die Oeffnung 27 in den Tank 17 eindringen kann. Dies bewirkt, dass etwas Flüssigkeit austritt, so dass das hydrostatische Gleichgewicht augenblicklich wieder hergestellt wird.

Dank der Oeffnungen 42, 44 ist im Betrieb die Verlängerung 41 mit Flüssigkeit gefüllt. Dies ist zur Funktion der Füllstandanzeige notwendig. Es ist zu beachten, dass der stabförmige Füllstandanzeiger 49 mit grossem Spiel in die Ausnehmung 51 passt. Diese bleibt während des Betriebs trocken. Es können sich daher in der Ausnehmung 51 und am Füllstandanzeiger 49 keine Verkrustungen bilden, welche zu einer Fehlanzeige führen könnten. Im Betrieb findet auch keine Berührung zwischen dem Schwimmer 47 und dem käfig- oder hohlzylinderförmigen Betätigungsglied 41 statt.

Geht der Flüssigkeitsvorrat im Tank 17 zur Neige, so wechselt der Tauchschwimmer 47 vom Tauchzustand in den Schwimmzustand. Der farbige Füllstandanzeiger verschwindet dabei aus dem Blickfeld und gibt so das Signal zum Nachfüllen.

Während der Vegetationsruhepause kann der Nachschub von Flüssigkeit durch Entriegeln des Verschlussdeckels unterbrochen werden. Das Entriegeln bewirkt das Schliessen des Ventils 35, wie dies bereits früher beschrieben wurde.

Die Ausführungsform gemäss Fig. 2 unterscheidet sich von jener von Fig. 1 im wesentlichen dadurch, dass die Wanne 11 einen sich seitlich über die Tankwandung hinauserstreckenden Abschnitt 12 aufweist. Dagegen fehlt die Aussparung 23 von Fig. 1. Der Behälter ist mit einem Flansch 55 auf einem Sockel 57 befestigbar. Der Behälter kann in dieser Form beispielsweise als Weihwasserspender dienen. Möglich ist auch die Verwendung als Grablicht. Dies wird mit dem mit gestrichelten Linien gezeigten Docht 64 und dem Windschutzglas 67 illustriert. Die Funktionsweise ist die gleiche wie bereits unter Bezugnahme auf Fig. 1 beschrieben, so dass auf diese Beschreibung verwiesen werden kann.

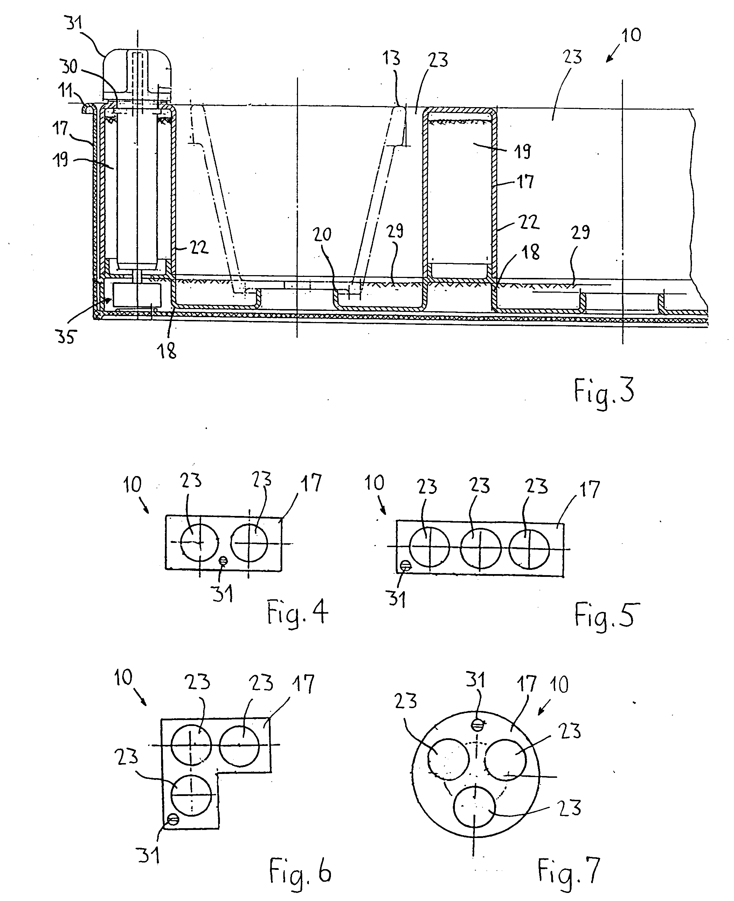

Während der Behälter von Fig. 1 für einen einzigen Verbraucher 13, 14 konzipiert ist, stellt die Ausführungsform von Fig. 3 einen Behälter dar, dessen Tank 17 Ausnehmungen 23 zur Aufnahme von zwei oder mehr Verbrauchern 13, 14 aufweist. Dies ermöglicht auch den gleichzeitigen Einsatz von Humus- und Hydrokultur nebeneinander.

Fig. 3 zeigt auch, dass es möglich ist, eine andere Form der Wanne 11 vorzusehen. Diese Wanne 11 erstreckt sich bis zur Oberseite des Tanks 17 oder darüber hinaus. Bei dieser Ausführung weist der Tank 17 ein Unterteil 18 auf, welches flüssigkeitsdicht, z.B. durch Schweissen, mit dem Oberteil 22 verbunden ist.

Wie die Figuren 4 bis 7 zeigen, sind verschiedene Konfigurationen möglich. Es wäre aber auch möglich, Einheiten gemäss Fig. 1 zu solchen Konfigurationen zusammenzuschliessen, wobei jeweils für eine Verbindung zwischen den Wannen 11 und den Tanks 17 gesorgt werden muss, wenn erwünscht ist, die Nachfüllung für mehrere Verbraucher über eine einzige Einfüllöffnung 31 vorzunehmen.

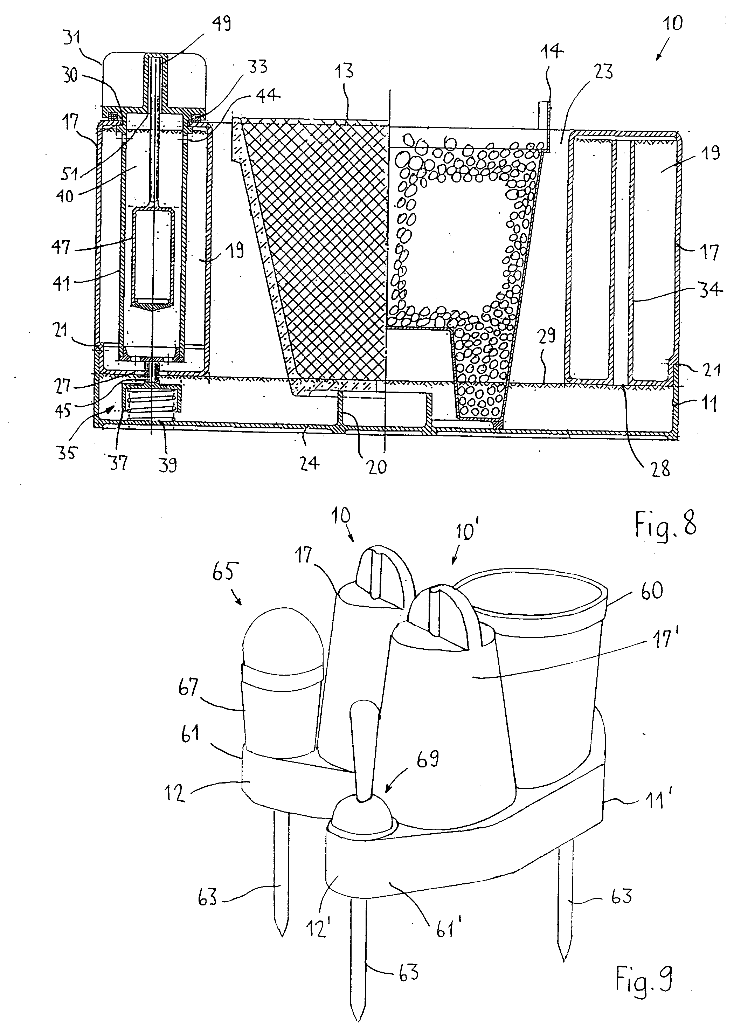

Die besonders vorteilhafte Ausführungsform der Erfindung gemäss Fig. 8 unterscheidet von jener von Fig. 1 dadurch, dass separate Oeffnungen 28, 27 für den Lufteinlass und den Wasserauslass vorgesehen sind. Von der Lufteinlassöffnung 28 führt ein Luftkanal 34 in den oberen Bereich des Tanks 17. Inbezug auf den übrigen Aufbau kann auf die Beschreibung von Fig. 1 verwiesen werden. Es ist aber zweckmässig, die Wasserauslassöffnung 27 etwas tiefer anzuordnen als die Lufteinlassöffnung 28, damit im Betrieb Luft nur durch die Lufteinlassöffnung 28 einströmen kann. Auch die Funktionsweise des Geräts von Fig. 8 ist nicht wesentlich verschieden von jenem von Fig. 1. Wird Flüssigkeit vom Verbraucher 13, 14 aufgenommen, so sinkt der Flüssigkeitsspiegel ab, so dass etwas Luft durch die Oeffnung 28 und den Kanal 34 in den Tank 17 eindringen kann. Dies bewirkt, dass etwas Flüssigkeit durch die Oeffnung 27 austritt, so dass das hydrostatische Gleichgewicht augenblicklich wieder hergestellt wird.

Eine besonders vorteilhafte Ausführungsform der Erfindung ist das in Fig. 9 dargestellte Grabgesteck, welches vorteilhaft aus Kunststoff gefertigt ist. Dieses Grabgesteck besteht aus der Kombination von zwei Behältern 10, 10' von der vorangehend beschriebenen Art, wobei ein Tank 17 zur Speicherung für die Brennflüssigkeit eines Grablichts 65 und ein Tank 17' zur Speicherung für die Brennflüssigkeit eines Grablichts und ein Tank 17' zur Speicherung von Weihwasser vorgesehen ist. Weiter ist eine Blumenvase 60 zur Aufnahme von Schnitt-, Trocken- oder Kunstblumen vorgesehen. Es wäre auch möglich, einen dritten Tank für die Blumenvase vorzusehen.

Die Wanne 11' ist vorteilhaft einstückig und besitzt naturgemäss für jeden Tank 17, 17' ein Abteil 61, 61', wobei das eine Abteil 61 der Abgabe von Brennflüssigkeit und das andere Abteil 61' der Abgabe von Weihwasser dient. Ein drittes Abteil könnte vorgesehen werden, um Wasser an Pflanzen in der Blumenvase abzugeben. Unten an der Wanne 11' sind Verankerungsstäbe 63 zur Verankerung des Grabgestecks im Erdreich vorgesehen. Wie in Fig. 2 dargestellt, kann über dem herausragenden Abschnitt 12 ein Docht 64 für die Flamme des Grablichts 65 und ein Windschutz 67 vorgesehen sein. Ueber dem Abschnitt 12' kann ein Weihwasserwedel 69 angeordnet sein.

Es sind verschiedene Aenderungen möglich, ohne vom Erfindungsgedanken abzuweichen. So ist dem Fachmann beispielsweise ersichtlich, dass auch die Behälter gemäss den Figuren 2 bis 7 und 9 mit getrennten Wasserauslass- und Lufteinlassöffnungen versehen werden können, wie dies unter Bezugnahme auf die Figur 8 beschrieben wurde.

## Patentansprüche

1. Behälter zur gesteuerten Abgabe von Flüssigkeit an einen Verbraucher, gekennzeichnet durch eine Wanne (11) zur Abgabe von Flüssigkeit an einen Verbraucher (13, 14), einen Tank (17) zur Speicherung einer Flüssigkeitsreserve (19) und Mittel (27), welche den Pegelstand der Flüssigkeit in der Wanne (11) konstant halten, indem sie entsprechend dem Flüssigkeitskonsum durch den Verbraucher (13, 14) Flüssigkeit aus dem Tank (17) in die Wanne (11) fliessen lassen.

2. Behälter nach Anspruch 1, dadurch gekennzeichnet, dass der Tank (17) im Betrieb luftdicht abgeschlossen ist und unten auf der Höhe des gewünschten Flüssigkeitspegels in der Wanne (11) eine Oeffnung (27) aufweist.

3. Behälter nach Anspruch 2, dadurch gekennzeichnet, dass der Tank (11) eine Einfüllöffnung (30) mit einem luftdicht verschliessbaren Verschlussdeckel (31) und ein Ventil (35) zum Verschliessen der Oeffnung (27) im Tank (17) aufweist.

4. Behälter nach Anspruch 3, dadurch gekennzeichnet, dass der Verschlussdeckel (31) ein Betätigungsglied (41) aufweist, welches bei verschlossener Einfüllöffnung (30) auf das Ventil (35) einwirkt, um dieses offen zu halten.

5. Behälter nach Anspruch 4, dadurch gekennzeichnet, dass das Betätigungsglied (41) einen Raum (40) zur Aufnahme eines Schwimmers (47) mit einem Füllstandanzeiger (49) aufweist.

6. Behälter nach einem der Ansprüche 3 bis 5, dadurch gekennzeichnet, dass der Verschlussdeckel (31) durchsichtig oder transparent ist.

7. Behälter nach Anspruch 5 oder 6, dadurch gekennzeichnet, dass der Schwimmer (47) ein Tauchschwimmer ist.

8. Behälter nach einem der Ansprüche 1 bis 7, dadurch gekennzeichnet, dass der Tank durchsichtig oder transparent ist.

9. Behälter nach einem der Ansprüche 1 bis 8, dadurch gekennzeichnet, dass die Wanne (11) mindestens eine Auflage (20) zum Aufsetzen eines Pflanzenbehälters (13) aufweist.

10. Behälter nach Anspruch 9, dadurch gekennzeichnet, dass die Auflage (20) eine Höhe besitzt, welche im Betrieb unter dem Flüssigkeitsspiegel liegt.

11. Behälter nach einem der Ansprüche 1 bis 10, dadurch gekennzeichnet, dass der Tank (17) über der Wanne (11) angeordnet ist und mindestens eine Aussparung (23) für Pflanzen aufweist.

12. Behälter nach einem der Ansprüche 1 bis 10, dadurch gekennzeichnet, dass der Tank (17) aus einem Oberteil (22) und einem Unterteil (18) besteht.

13. Behälter nach Anspruch 12, dadurch gekennzeichnet, dass das Unterteil (18) eine Auflage (20) zum Aufsetzen eines Pflanzenbehälters (13) aufweist.

14. Behälter nach einem der Ansprüche 1 bis 13, dadurch gekennzeichnet, dass der Tank (17) im Betrieb luftdicht abgeschlossen ist, dass der Tank eine Oeffnung (2,7) zum Wasserauslass im unteren Bereich aufweist und eine Oeffnung (28) zum Lufteinlass auf der Höhe des gewünschten Flüssigkeitsspiegels in der Wanne (11) besitzt, und dass sich ein Lufteinlasskanal (34) von der Lufteinlassöffnung (28) bis in den oberen Bereich des Tanks erstreckt.

15. Verwendung mehrerer Behälter nach einem der Ansprüche 1 bis 14, wobei die Wannen (11) und Tanks (17) von je zwei benachbarten Behältern miteinander kommunizieren.

16. Grabgesteck mit mindestens zwei Behältern (10, 10') gemäss einem der Ansprüche 1 bis 14, wobei jeder Behälter der Aufnahme einer anderen Flüssigkeit, z.B. Brennflüssigkeit und Weihwasser, dient.

17. Grabgesteck nach Anspruch 16, mit mindestens zwei Tanks (17, 17') und einer den Tanks gemeinsamen Wanne (11'), welche für jeden Tank (17, 17') ein Abteil (61, 61') aufweist.
